(19) **Europäisches Patentamt / European Patent Office / Office européen des brevets**

(11) **EP 1 796 291 A1**

(12) # EUROPEAN PATENT APPLICATION
published in accordance with Art. 158(3) EPC

(43) Date of publication:
**13.06.2007 Bulletin 2007/24**

(51) Int Cl.:
***H04B 7/26*** (2006.01)

(21) Application number: **04788291.5**

(22) Date of filing: **29.09.2004**

(86) International application number:
**PCT/JP2004/014224**

(87) International publication number:
**WO 2006/035498 (06.04.2006 Gazette 2006/14)**

(84) Designated Contracting States:
**DE FR GB**

(71) Applicants:
 • **Fujitsu Ltd.**
  **Kawasaki-shi, Kanagawa 211-8588 (JP)**
 • **NTT DoCoMo, Inc.**
  **Tokyo 100-6150 (JP)**

(72) Inventors:
 • **NAKAYAUCHI, Natsuhiko**
  **FUJITSU LIMITED**
  **Kawasaki-shi, Kanagawa 211-8588 (JP)**
 • **TOMIYOSHI, Norio,**
  **FUJITSU LIMITED**
  **Kawasaki-shi, Kanagawa 211-8588 (JP)**

 • **YAMANO, Osamu,**
  **FUJITSU LIMITED**
  **Kawasaki-shi, Kanagawa 211-8588 (JP)**
 • **OKUMURA, Yukihiko,**
  **NTT DoCoMo**
  **Chiyoda-ku,**
  **Tokyo 100-6150 (JP)**

(74) Representative: **Hitching, Peter Matthew**
  **Haseltine Lake**
  **Lincoln House**
  **300 High Holborn**
  **London WC1V 7JH (GB)**

(54) **TRANSMISSION POWER CONTROL UNIT AND TRANSMISSION POWER CONTROL METHOD**

(57) A receiving side compares measured quality of received data with target quality and performs variable control of a target SIR, as well as, compares that target SIR with measured SIR and transmits transmission-power information (TPC information) that is created based on the comparison result to a transmitting side, then the transmitting side performs control of the transmission power based on that transmission power control information. Furthermore, the receiving side monitors whether the transmission power has reached a limit, and stops update of the target SIR when the transmission power has reached the limit. Also, when the communication environment changes and it becomes possible to perform transmission power control, the receiving side restarts variable control of the target SIR.

*FIG. 1*

## Description

Technical Field

The present invention relates to a power transmission control apparatus and control method thereof, and more particularly to a transmission power control apparatus and control method thereof that variably controls a target SIR by comparing measured quality of received data (for example, error quality that is calculated based on a received signal after decoding) with target quality, and compares that target SIR with measured SIR (reception quality that is calculated based on the received signal before decoding), then sends transmission power control information that is created based on the comparison results to transmitting side to control the transmission power of the transmitting side.

Background Art

In W-CDMA mobile communication, by distinguishing channels by spreading code that is assigned to each channel, communication is performed with a plurality of channels sharing one frequency bandwidth. However, in an actual mobile-communication environment, the received signals suffer interference from its own channel and other channels due to a delay wave caused by multi-path fading and radio waves from other cells, and that interference adversely affects channel separation. Also, the amount of interference that a received signal suffers varies over time due to instantaneous fluctuation of the reception power caused by multi-path fading or due to a change in the number of users performing communication at the same time. In this kind of environment of receiving interference that varies over time, it is difficult to stabilize and maintain the quality of a signal, which is received by a mobile station that is connected to a base station, at a desired quality.
In order to follow these kinds of changes in the number of interfering users or instantaneous fluctuations due to multi-path fading, a W-CDMA mobile station that complies wi th 3GPP (3rd Generation Partnership Project) standards measures the signal-to-interference power ratio (SIR) of a received signal, and by comparing the measured SIR with a target SIR, creates transmission power control information so that the reception SIR comes close to the target SIR and sends the information to the base station, and the base station performs inner-loop transmission power control that controls the transmission power based on that transmission power control information. However, due to changes in speed of the mobile station during communication, or changes in the propagation environment due to movement, the necessary SIR for obtaining the desired quality (BLER: Block Error Rate) is not fixed. The BLER is the ratio between the total number of transport blocks (TrBk) in a fixed period of time and the number of TrBk for which CRC error occurred. In order to cope with to these changes, the mobile station measures actual BLER and performs control that increases the target SIR when the measured qual i ty is worse than the target qual i ty and decreases the target SIR when the measured qual i ty is better than the target quality. This kind of control that adaptively changes the target SIR in order to realize the desired quality is called outer-loop transmission power control.

· Inner-loop Transmission power control

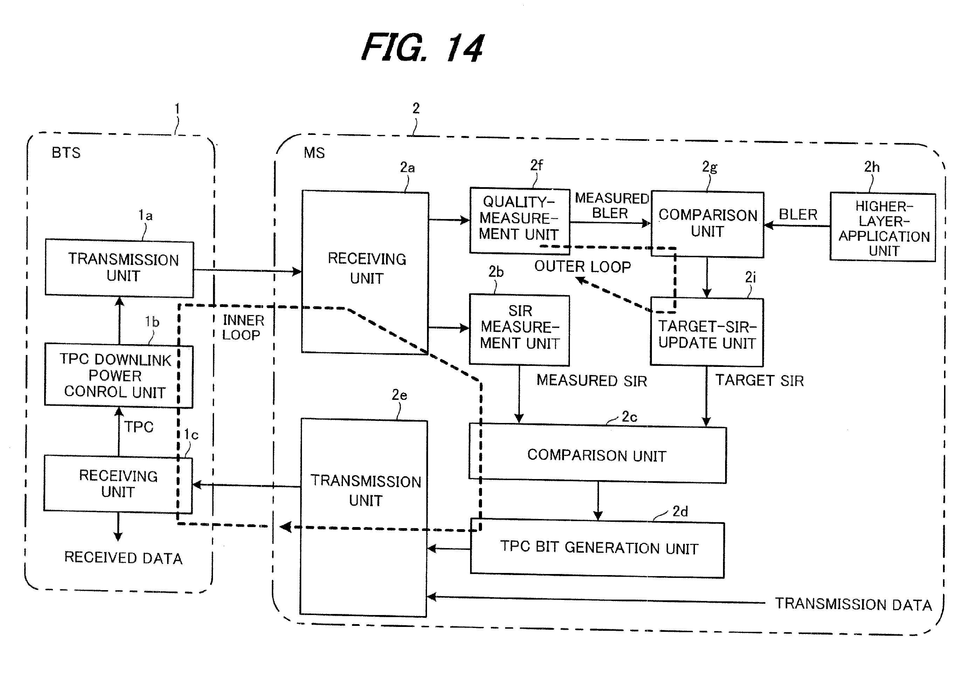

FIG. 14 is a drawing that explains the inner-loop transmission power control and outer-loop transmission power control. A spreading-modulation unit in the transmission unit 1a of a base station (BTS) 1 performs spreading modulation of the transmission data using spreading code that corresponds to a specified channel, and a power amplifier amplifies the signal that has been processed by quadrature modulation, frequency up conversion or the like after spreading modulation, and transmits the signal toward a mobile station (MS) 2 from an antenna. An inverse-spreading unit inside the receiving uni t 2a of the mobile station performs inverse spreading of the received signal, and a demodulation unit demodulates the received data. A SIR-measurement uni t 2b measures the SIR, which is the ratio between the power of the received signal and that of an interference signal, then a comparison unit 2c compares a target SIR that was set by outer-loop transmission power control (explained later) with the measured SIR, and a TPC-bit-generation unit 2d generates a command that lowers the transmission power by the TPC (Transmission power control) bit when the measured SIR is greater than the target SIR, and generates a command that increases the transmission power by the TPC bit when the measured SIR is less than the target SIR.
A spreading-modulation unit inside the transmission unit 2e performs spreading modulation of transmission data (audio data, UDI, packet data, etc.) that has been encoded by an encoding unit (not shown in the figure) and control data (TPC, TFCI, Pilot, FBI) as I-and Q- signals respectively, and a radio unit performs processing such as quadrature modulation, frequency up-conversion, power amplification, or the like on the spread and modulated signal, and transmits that signal toward the base station 1 from an antenna. The receiving unit 1c of the base station 1 performs inverse-spreading on the received signal, and demodulates the received data and TPC bit, then a TPC downlink power control unit 1b performs control so as to increase (UP control) or decrease (DOWN control) by a specified amount the transmission power of the transmission-power amplifier inside the transmission unit 1a according to the command specified by the TPC bit. After that, the aforementioned transmission power control is performed in order to obtain the desired target SIR. The target SIR, for example, is an SIR value that is necessary for obtaining $10^{-3}$ (error occurrence at a rate of 1 time in 1000 times), and is set by the outer-loop transmission power control.

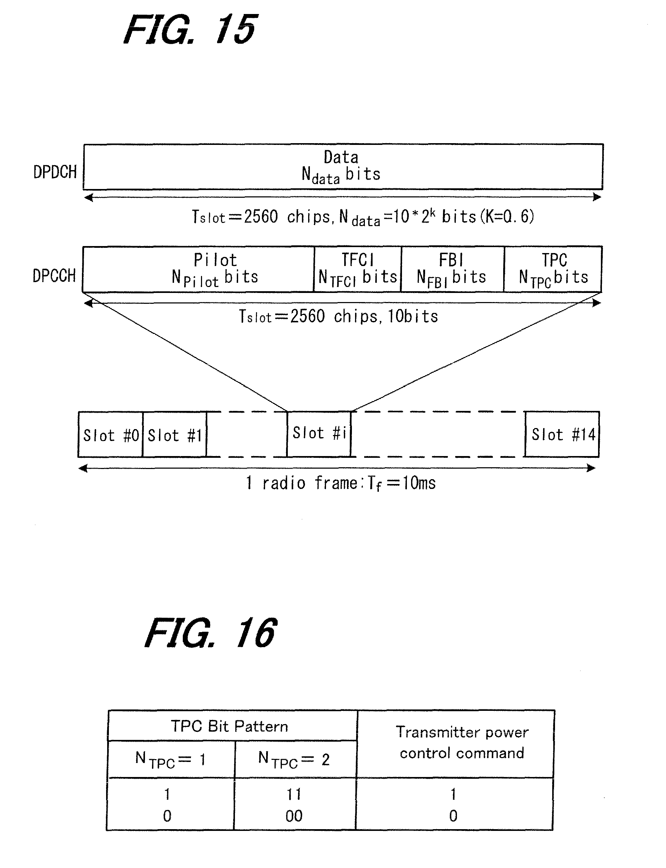

FIG. 15 is a drawing showing the configuration of an uplink dedicated physical channel DPCH frame that is standardized by 3GPP, and it has a DPDCH channel (Dedicated Physical Data Channel) by which transmission data is transmitted, and a DPCCH channel (Dedicated Physical Control Channel) by which multiplexed control data such a pilot and TPC-bit information as explained in FIG. 14 are transmitted, and after being spread by orthogonal code, they are mapped and multiplexed on a real-number axis and imaginary-number axis. One frame in the uplink is 10 msec, and comprises 15 slots (slot #0 to slot #14). The DPDCH channel is mapped onto an orthogonal I channel (real-number axis), and the DPCCH channel is mapped onto an orthogonal Q channel (imaginary-number axis). Each slot of the DPDCH channel comprises n bits, where n changes according to the symbol speed. Each slot of the DPCCH channel that transmits control data comprises 10 bits, with a symbol speed that is fixed at 15 kbps, and transmits a pilot Pilot, transmission power control data TPC, transport-format-combination indicator TFCI and feedback information FBI. Depending on the slot format, the TPC bit can be one bit as shown in FIG. 16, or can be 2 bits, and when it is 1 bit, '1' indicates power UP, and '0' indicates power DOWN, and when it is 2 bits, '11' indicates power UP and '00' indicates power DOWN.

· Outer-Loop Transmission power control

In outer-loop transmission-power control, a demodulation unit inside the receiving unit 2a of the mobile station 2 demodulates a signal that is transmitted from the base station 1, then an error-correction decoder performs error correction on the demodulated signal, and a CRC-detection unit of a quality-measurement unit 2f separates the error-correction-decoding result for each transport block TrBk, performs CRC-error detection for each TrBk, calculates the BLER (Block Error Rate) and inputs that BLER (measured BLER) to a comparison unit 2g. Also, beforehand, for example when a dedicated channel DCH is set, a higher-layer-application unit 2h sets a target BLER in the comparison unit 2g that corresponds to the type of DCH service, such as audio-service, packet-service or the like. The comparison unit 2g compares the measured BLER with the target BLER and inputs the comparison result to a target-SIR-update unit 2i. When the measured BLER is better than the target BLER (reception quality is good) the target-SIR-update unit 2i updates the target SIR so that that target SIR becomes smaller, however, when the target BLER is better (reception quality is poor), it updates the target SIR so that that target SIR becomes larger. Therefore, with outer-loop transmission-power control, control is performed to change the target SIR in accordance to the communication environment so that the target BLER is obtained, and by doing this, it is possible to constantly request the base station for adequate power.

There is a lower and upper limit to the downlink transmission power of the base station 1, and it is not possible to lower the transmission power more than the lower limit, or raise the transmission power more than the upper limit. Due to these limits of the transmission power, in an environment with good reception quality, the target SIR becomes an excessively low value, and in an environment with poor reception quality, the target SIR becomes an excessively high value by the outer-loop transmission-power. As the environment changes in these states due to movement, the target SIR is an excessively low value or high value, so there is a problem in that the target SIR does not become a suitable value that corresponds to environment change in short period of time, and thus it is not possible to perform prompt transmission power control.

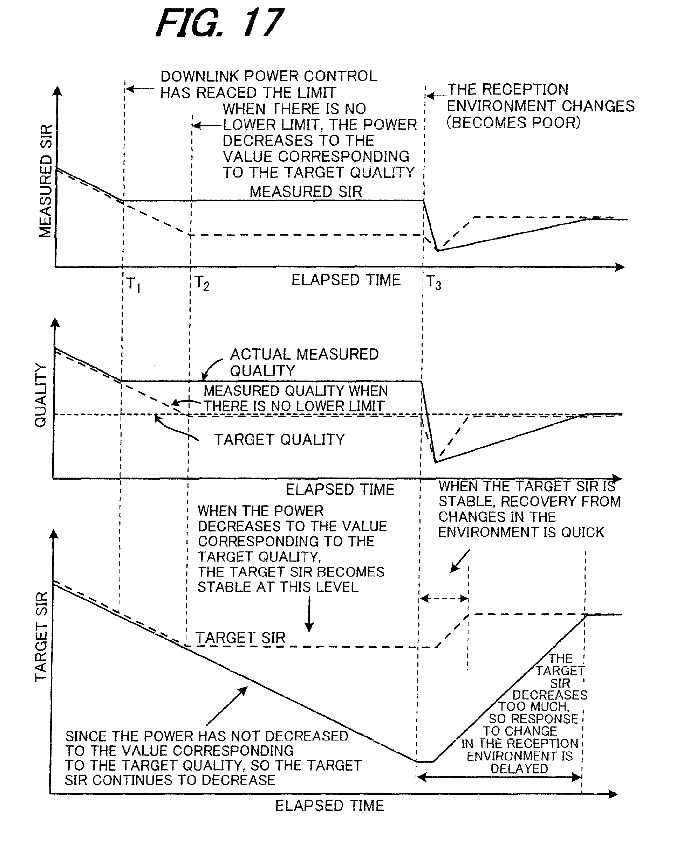

FIG. 17 are change curves showing the change in measured SIR, reception quality (quality) and target SIR when transmission power control is performed in an environment wi th good reception qual i ty, in which the dotted lines are the desired change curves, and the solid lines are curves in a case where the transmission power of the base station has reached the lower limit and cannot be decreased any further. First, transmission power control will be explained by focusing attention on the desi red change curves shown by the dotted lines. When a base station is nearby and there is an environment of good reception quality, the measured quality is better than the target quality, so the target SIR is lowered by the specified amounts by the outer-loop transmission-power control. Also, the inner-loop transmission-power control is performed to lower the transmission power, and the measured SIR and measured quality decrease gradually toward the right down. When there is no lower limit to the transmission power, then by the control described above, at time T2 the measured quality nearly matches the target quality, and the measured SIR nearly matches the target SIR. After that, as the good reception state continues, the measured SIR, target SIR and measured quality become constant, and the target SIR does not become excessively small. At time T3 the reception state becomes poor due to movement, so the measured SIR and measured quality drop temporarily, however, from the inner-loop transmission-power control and outer-loop transmission-power control the transmission power increases and the measured SIR and target SIR become stable to correspond to the new reception environment, and the measured quality matches the target quality. In this case, the target SIR does not become excessively small in a good reception environment, so through the outer-loop transmission-power control it becomes a value that corresponds to the new environment in a short period of time, and the transmission power can be controlled so that it becomes a value that corresponds to the new environment in a short period of time.

Transmission power control according to the desired change curves was explained above, however, since there is actually a lower limit to the transmission power, it is not possible to lower the transmission power below the value of that lower limit. Therefore, in an environment of good reception, control is performed to lower the transmission power, and as shown by the solid lines, the measured SIR and measured quality decrease gradually, however, at time T1 the transmission power reaches the lower I imi t, and after that the measured SIR and measured qual i ty level off. At this time, the measured quality is better than the target quality, so after that, through the outer-loop transmission-power control, the target SIR decreases by the specified amounts to become a small value. Also, at time T3, the reception state becomes poor due to movement, so the measured SIR and measured quality decrease temporarily, and through the inner-loop transmission-power control and outer-loop transmission-power control the transmission power becomes large and the measured SIR and target SIR become stable at values that correspond to the new reception environment, and the measured quality and target quality match. In this case, since the target SIR is excessively small, it takes time until it becomes a value that will correspond to the new environment, and it takes a long time for the transmission power to become a value that corresponds to the new environment, so there is a problem in that the period in which the target quality is not achieved becomes long.

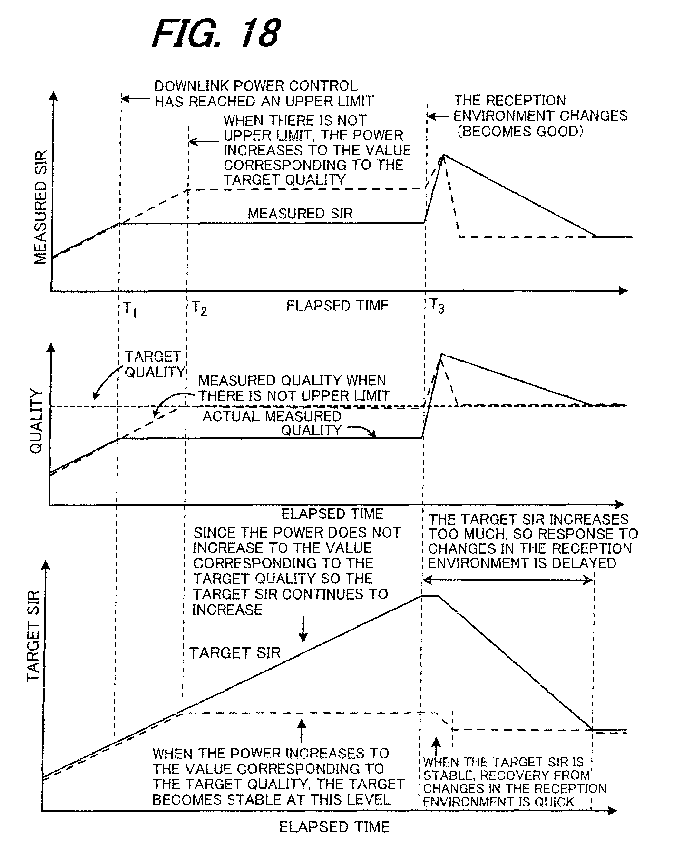

FIG. 18 are change curves showing the change in the measured SIR, reception quality (quality) and target SIR when the transmission power is controlled in an environment with poor reception quality, in which the dotted lines are the desired change curves, and the solid lines are curves in a case where the transmission power of the base station has reached the upper limit and cannot be raised any further. First, transmission power control will be explained by focusing attention on the des i red change curves shown by the dotted lines. In an environment with poor reception quality, the measured quality is worse than the target quality, so through the outer-loop transmission-power control, the target SIR is raised by the specified amounts. Also, the inner-loop transmission-power control is performed to raise the transmission power, and the measured SIR and measured quality increase gradually toward the right up. When there is no upper limit to the transmission power, by the control described above, at time T2 the measured quality nearly matches the target quality, and the measured SIR nearly matches the target SIR. After that, since there is no change in the reception quality, the measured SIR, target SIR and measured quality become constant, and the target SIR does not become excessively large. At time T3, as the reception quality becomes better due to movement, the measured SIR and measured quality temporarily become large, however, through the inner-loop transmission-power control and outer-loop transmission-power control, the transmission power decreases, and the measured SIR and target SIR become stable at values that correspond to the new reception environment, and the measured quality and target quality match. In this case, since the target SIR does not become excessively large in a poor reception environment, through the outer-loop transmission-power control it becomes a value that corresponds to the new environment in a short period of time, and thus it is possible to control the transmission power so that it becomes a value that corresponds to that new environment in a short period of time.

Transmission power control according to desired change curves was explained above, however, since there is actually an upper limit to the transmission power, it is not possible to raise the transmission power above the upper limit. Therefore, in an environment wi th poor reception quality, control is performed to raise the transmission power, and as shown by the solid lines, the measured SIR and measured quality gradually increase, however, at time T1 that transmission power reaches the upper limit, and after that the measured SIR and measured quality level off. At this time, the actual measured qual ity is worse than the target quality, so after that, through the outer-loop transmission-power control, the target SIR is increased by the specified amounts to become a large value. Also, at time T3, as the reception state becomes better due to movement, the measured SIR and measured quality temporarily become high, and then through the inner-loop transmission-power control and outer-loop transmission-power control, the transmission power decreases, the measured SIR and target SIR become stable at values that correspond to the new reception environment, and the measured quality matches the target quality. In this case, since the target SIR is excessively large, it takes time until it becomes a value that corresponds to the new environment, and it takes a long time for that transmission power to become a value that corresponds to that new environment, so a problem occurs in that the period in which that target quality cannot be achieved becomes long.

There is a technique that prevents the delay in updating the target SIR and maintains communication quality when the propagation environment suddenly becomes poor (for example, Japanese patent laid-open number 2001-274748 A). In this prior art, when the difference between the maximum value and minimum value of the updated target SIR in a past fixed period of time exceeds a set value, a lower limit is established for the target SIR and the target SIR is controlled to be not set to a value below that lower limit.

The prior art is useful in that it prevents delay in updating the target SIR, however, it is not preferred from the aspect that limits are applied to the original performance of the apparatus. Moreover, the prior art does not prevent the target SIR from becoming an excessively small value or excessively large value when the transmission power reaches the lower limit t or upper limit.

Taking into consideration the problems described above, it is the object of the present invention to prevent the target reception quality (target SIR) from becoming an excessively small value or excessively large value even when the transmission power reaches the lower limit or upper limit.

Another object of the present invention is to detect on the receiving side when the transmission power has reached a lower limit or upper limit, and prevent the target reception quality (target SIR) from becoming an excessively small value or excessively large value

Moreover, another object of the present invention is to accurately detect on the receiving side when the transmission power has reached a lower limit or upper limit.

Disclosure of the Invention

The present invention accomplishes the aforementioned objects by a transmission power control method that comprises step of comparing measured quality of received data on a receiving side with target quality and performing variable control of a target SIR, as well as step of comparing that target SIR with measured SIR and transmitting transmission-power information that is created based on the comparison result to a transmitting side, and step of performing control of the transmission power on the transmitting side based on that transmission power control information. This transmission power control method further comprises steps of: monitoring when the transmission power has reached a limit, and stopping update of the target SIR when the transmission power has reached a limit.

The transmission power control method further comprises steps of: comparing the target SIR with a measured SIR when control is performed in a direction that decreases the target SIR; and determining that the transmission power has reached a lower limit when the number of times that the measured SIR is less than the target SIR becomes a set ratio or less of the number of times that the measured SIR is greater than the target SIR. Also, the transmission power control method further comprises steps of comparing the target SIR with a measured SIR when control is performed in a direction that increases the target SIR; and determining that the transmission power has reached an upper limit when the number of times that the measured SIR is greater than the target SIR becomes a set ratio or less of the number of times that the measured SIR is less than the target SIR. This transmission power control method further comprises steps of stopping counting of the aforementioned number of times when there is a non-sensitive region on both sides of the target SIR and the difference between the target SIR and measured SIR is in that non-sensitive region, and performing counting of the aforementioned number of times when the difference between the target SIR and measured SIR is not in the non-sensitive region. Moreover, the transmission power control method comprises steps of counting the number of times the transmission power control information specifies power UP, and the number of times the transmission power control information specifies power DOWN, when control is performed in the direction of decreasing the target SIR and determining that the transmission power has reached a lower limit when the number of times power UP is specified becomes a set ratio or less of the number of times power DOWN is specified. Also, the transmission power control method further comprises steps of counting the number of times the transmission power control information specifies power UP, and the number of times the transmission power control information specifies power DOWN, when performing control in the direction of increasing the target SIR and determining that the transmission power has reached an upper limit when the number of times power DOWN is specified becomes a set ratio or less of the number of times power UP is specified.

The present invention accomplishes the aforementioned objects by a transmission power control apparatus that compares measured quality of received data with target qual i ty and performs variable control of a target SIR, as well as, compares that target SIR with measured SIR, and transmits transmission-power-control information created based on the comparison result to a transmitting side, and comprises: a limit-monitoring unit that monitors when the transmission power has reached a limit; and a target-SIR-update unit that stops update of the target SIR when the transmission power has reached a limit.

The limit-monitoring unit comprises: a counting unit that compares the target SIR with a measured SIR and counts the number of times when the measured SIR was less than the target SIR, and the number of times when the measured SIR was greater than the target SIR; and a judgment unit that determines that the transmission power has reached a lower limit when control is performed in the direction of decreasing the target SIR, and when the number of times that the measured SIR is less than the target SIR becomes a set ratio or less of the number of times that the measured SIR is greater than the target SIR.

Moreover, the limit-monitoring unit comprises: a counting unit that compares the target SIR with a measured SIR and counts the number of times when the measured SIR is less than the target SIR, and the number of times when the measured SIR is greater than the target SIR; and a judgment unit that determines that the transmission power has reached an upper limit when control is performed in the direction of increasing the target SIR, and when the number of times that the measured SIR is greater than the target SIR becomes a set ratio or less of the number of times that the measured SIR is less than the target SIR. Also, the counting unit stops counting when there is a non-sensitive region on both sides of the target SIR and the difference between the target SIR and measured SIR is in that non-sensitive region; and performs counting when the difference between the target SIR and measured SIR is not in the non-sensitive region.

The present invention accomplishes the aforementioned objects by a radio communication apparatus comprising: a transmission unit that transmits a signal that is used in transmission power control to another communication apparatus, in which the signal is created using a first comparison result obtained by comparing reception quality calculated based on a received signal before decoding with target-reception quality; a target-reception quality update unit that performs control to increase or decrease the target-reception quality according to a second comparison result, which is obtained by comparing error quality calculated based on a received signal after decoding with target error quality; and a regulating unit that regulates control of increasing or decreasing the target-reception quality by the target-reception quality update unit based on the first comparison result.

The regulating unit regulates control of decreasing the target-reception quality when the reception quality that is calculated based on the received signal before decoding tends toward the high side with respect to the target-reception quality. Also, the said regulating unit regulates control of increasing the target-reception quality when the reception quality that is calculated based on the received signal before decoding tends toward the low side with respect to the target-reception quality.

According to the present invention, it is possible to prevent the target SIR from becoming an excessively small or excessively large value even when the transmission power has reached a lower limit or upper limit. Therefore, it is possible to set an appropriate target SIR that corresponds to a new environment in short period of time, and thus it is also possible to control the transmission power to a desired value within a short period of time. In other words, according to this invention, it is possible to perform transmission power control that quickly adapts to changes in the environment so that the target quality is obtained within a short period of time.

According to the present invention, it is determined that the transmission power has reached a limit based on a ratio of the number of times that the measured SIR is smaller than the target SIR and the number of times that the measured SIR is larger than the target SIR, so it is possible to detect on the receiving side when the transmission power has reached a lower limit or upper limit. Also, counting of those number of times is stopped when there is a non-sensitive region located on both sides of the target SIR and the difference between the target SIR and the measured SIR is in that non-sensitive region, and counting is performed when the difference between the target SIR and the measured SIR is not in that non-sensitive region, so it is possible to accurately detect on the receiving side when the transmission power has reached a lower limit or upper limit.

According to the present invention, it is determined that transmission power control has reached a limit based on a ratio of the number of times that power UP is specified and the number of times that power DOWN is specified, so it is possible to easily detect on the receiving side when the transmission power has reached a lower limit or an upper limit.

Brief Description of the Drawings

FIG. 1 is a drawing showing the construction of a base station and mobile station that realize the transmission power control of this invention.
FIG. 2 is a drawing showing the configuration of a downlink frame that is sent from the base station.
FIG. 3 is a drawing that explains the transmission power control in an environment with good reception quality.
FIG. 4 is a drawing that explains the transmission power control in an environment with poor reception quality.
FIG. 5 is a drawing that explains the theory for detecting a state in which transmission power control is impossible.
FIG. 6 is a block diagram of a power-distribution-judgment unit.
FIG. 7 is a flowchart showing the processing flow when the power-distribution-judgment unit measures the power distribution.
FIG. 8 is a flowchart showing the flow of processing performed by a target-SIR-update unit.
FIG. 9 is a drawing showing the construction of a base station and mobile station that realize the transmission power control of a second embodiment of the invention.
FIG. 10 is a flowchart showing the processing flow for measuring the power distribution in a second embodiment.
FIG. 11 is a drawing that explains the power distribution due to error.
FIG. 12 is a drawing that explains a non-sensitive band on both sides of a target SIR.
FIG. 13 is a flowchart showing the processing flow for measuring the power distribution in a third embodiment.
FIG. 14 is a drawing that explains prior inner-loop transmission power control and outer-loop transmission power control.
FIG. 15 is a drawing showing the configuration of a dedicated physical channel in an uplink standardized by 3GPP.
FIG. 16 is a drawing that explains a TPC bit.
FIG. 17 are graphs showing prior change curves for measured SIR, reception quality and target SIR in the case of performing transmission power control in an environment with good reception quality.
FIG. 18 are graphs showing prior change curves for measured SIR, reception quality and target SIR in the case of performing transmission power control in an environment with poor reception quality.

Best Mode for Carrying Out the Invention

(1) First Embodiment

(a) Overview

The transmission power control apparatus of this invention compares measured quality of received data on the receiving side with target quality, and performs variable control to change the target SIR, as well as, compares that target SIR wi th measured SIR, and transmits transmission power control information (TPC information) created based on the comparison results to the transmitting side, where that transmitting side controls the transmission power based on that transmission power control information. Moreover, the transmission power control apparatus monitors whether the transmission power has reached a limit, and when it has reached a limit, sets the target SIR to the most recent value, and stops updating it. Also, when the communication environment becomes poor after the transmission power has reached the lower limit, or when the communication environment becomes good after the transmission power has reached the upper limit, it begins again to perform variable control to change the target SIR. By doing this, it is possible to prevent the target SIR from becoming an excessively small value or an excessively large value, and it is possible to set the target SIR to a suitable value that corresponds to the new environment in a short period of time, and thus it is possible to set the transmission power to a desired value in a short period of time.

(b) Construction

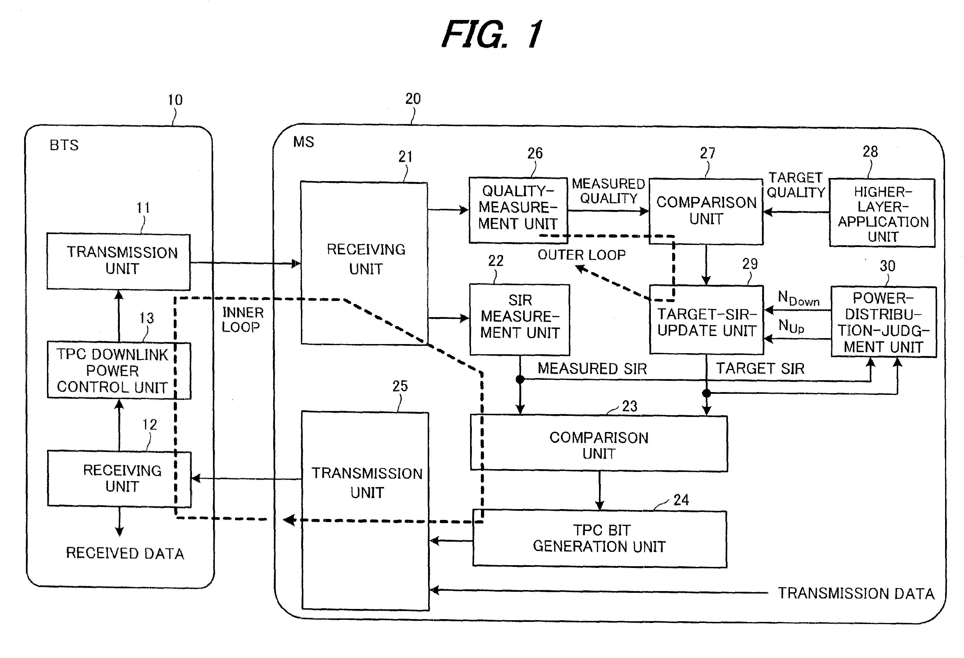

FIG. 1 is a drawing showing the construction of a base station and mobile station that make possible the transmission power control of this invention.

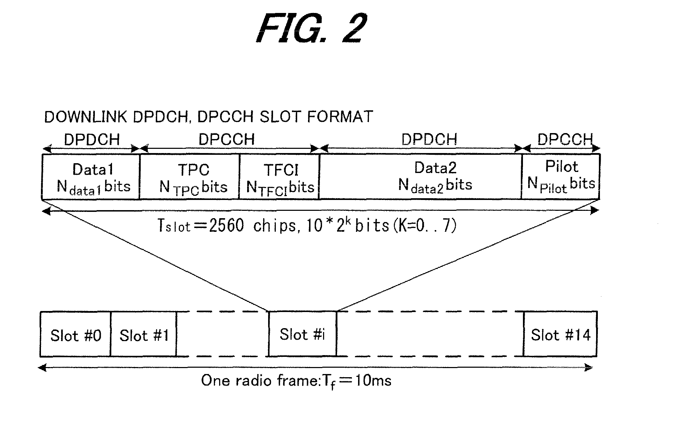

A spreading-modulation unit inside the transmission unit 11 of the base station (BTS) 10 spreads and modulates the transmission data using spreading code that corresponds to a specified channel, and a power amplifier amplifies the signal that has been processed by quadrature modulation, frequency up conversion or the like after spreading modulation, and transmits the signal toward the mobile station (MS) 20 from an antenna. An inverse-spreading unit inside the receiving unit 21 of the mobile station performs inverse spreading on the received signal, and a demodulation unit demodulates the received data. A SIR measurement unit 22 measures the reception quality of the received signal before decoding, and preferably measures the power ratio between the received signal and interference signal as an SIR. For example, it measures this SIR using a pilot signal Pilot that is included in the downlink dedicated physical channel (see FIG. 2). FIG. 2 is a drawing showing the configuration of a downlink frame that is sent from a base station, where one frame is 10 msec, and comprises 15 slots, #0 to #14; and each slot has time-sharing multiplexed configuration of a dedicated physical data channel DPDCH that transmits a first data section Data1 and a second data section Data2, and a dedicated physical control channel DPCCH that transmits a Pilot, TPC and TFCI.

A comparison unit (first comparison unit) 23 compares a target SIR that is set by the outer-loop transmission power control (described later) wi th the measured SIR, and a TPC bit generation unit 24 generates a TPC-bit to decrease the transmission power when the measured SIR is greater than the target SIR, and generates a TPC-bit to increase the transmission power when the measured SIR is less than the target SIR. A spreading-modulation unit inside a transmission unit 25 spreads and modulates both transmission data that is encoded by an encoding unit (not drawn) and control data that includes the TPC bit as an I-and Q-signals respectively, and a radio unit performs processing such as quadrature modulation, frequency up conversion and power amplification on the spread and modulated signal, and transmits the signal from an antenna toward the base station 10. The receiving unit 12 of the base station 10 performs inverse spreading on the signal received from the mobile station, and demodulates the received data and TPC bit, and a TPC DOWNLINK power-control unit 13 performs control to increase (UP) or decrease (DOWN) the transmission power of the power amplifier inside the transmission unit 11 according to the command specified by the TPC bit. After that, the aforementioned transmission power control is performed so that the desired target SIR is obtained.

At the same time as the inner-loop transmission-power control described above is being performed, a demodulation unit inside the receiving unit 21 of the mobile station demodulates the signal that is sent from the base station 10, an error-correction decoder performs error correction of the demodulated signal, and a CRC-detection unit of a quality-measurement unit 26 separates the error-correction-decoding results for each transport blocks TrBk, then performs CRC-error detection for each TrBk and calculates a BLER (BLOCK ERROR RATE), and inputs this BLER to a comparison unit (as measured quality) (second comparison unit) 27. Also, beforehand, for example, when a dedicated channel DCH is set, a higher-layer-application unit 28 sets a required BLER as target quality that corresponds to the type of DCH service in the comparison unit 27. The comparison unit 27 compares the measured quality with the target quality, and inputs the comparison result to a target-SIR-update unit 29.

A power-distribution-judgment unit (regulating unit) 30 acquires the transmission-power distribution and inputs it to the target-SIR-update unit 29. In other words, the power-distribution-judgment unit 30 compares target SIR with the measured SIR, and counts the number $N_{UP}$ of times when the measured SIR is less than the target SIR, and counts the number $N_{DOWN}$ of times the measured SIR is greater than the target SIR, and inputs the value of the count to the target-SIR-update unit 29.

The target-SIR-update unit 29 refers to the count values $N_{UP}$, $N_{DOWN}$ described above to determine whether or not the transmission power is in a state in which it cannot be controlled, or in other words, whether or not the transmission power has reached the lower limit or upper limit and is in a state in which it cannot be controlled, and based on that judgment, updates the target SIR. That is, when transmission power control is possible and the measured quality is better than the target quality (the reception quality is good), the target-SIR-update unit 29 updates that target SIR so that the target SIR is decreased a specified amount $\Delta_1$ from the current value and inputs the updated target SIR to the comparison unit 23. Also, when transmission power control is possible and the measured quality is worse than the target quality (the reception quality is poor), the target-SIR-update unit 29 updates that target SIR so that the target SIR is increased a specified amount $\Delta_2$ ($\Delta_2 > \Delta_1$), and inputs that updated target SIR to the comparison unit 23. Moreover, when the transmission power control is not possible (when the measured SIR inclines toward the high side with respect to the target SIR, or when the measured SIR inclines toward the low side with respect to the target SIR), the target-SIR-update unit 29 does not update the target SIR, but rather fixes it to the most recent value of the target SIR. Also, when the communication environment worsens after transmission power control had become impossible (after the transmission power has reached the lower limit) and the transmission power control becomes possible again, the target-SIR-update unit 29 begins the update control of the target SIR again. Similarly, when the communication environment becomes better after transmission power control had become impossible (after the transmission power has reached the upper limit) and the transmission power control becomes possible again, the target-SIR-update unit 29 begins update to control of the target SIR again.

(c) Transmission power control

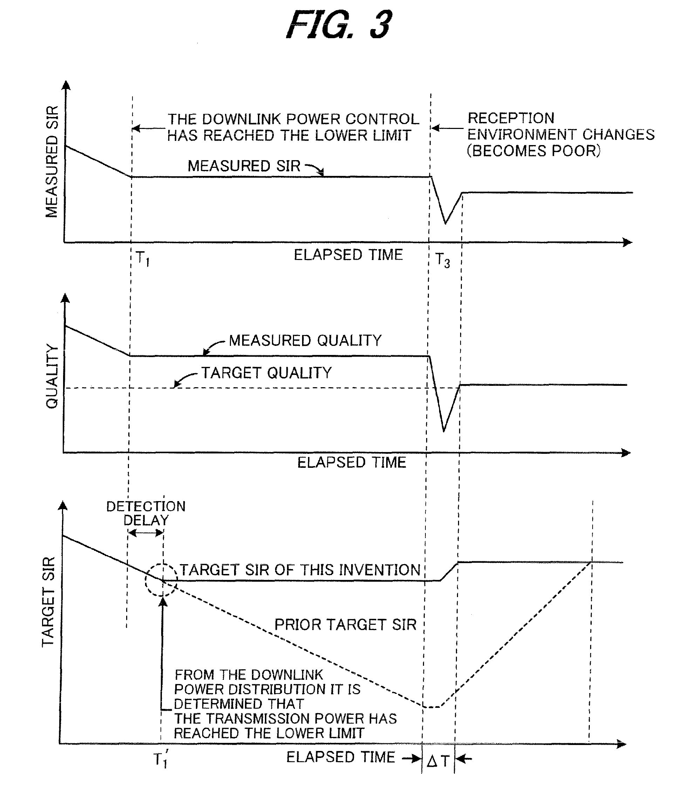

When the base station is nearby and in an environment with good reception quality, transmission power control is performed as described below. That is, in an environment with good reception quality, the measured quality becomes better than the target quality, so as shown in FIG. 3, the target-SIR-update unit 29 decreases the target SIR by specified amounts $\Delta_1$. Then through inner-loop transmission-power control, control is performed to lower the transmission power, and the measured SIR and measured quality decrease gradually. Also, at time T1, when the transmission power has reached the lower limit and transmission power control is no longer possible, the measured SIR and measured quality level off until transmission power control becomes possible again. Moreover, since the measured quality is better than the target quality, the target-SIR-update unit 29 decreases gradually the target SIR by specified amounts after that as well. However, at time T1', when it is detected that transmission power control has become impossible, the target-SIR-update unit 29 stops updating the target SIR and fixes it at the most recent value. After that, the measured SIR, measured quality and target SIR are stable at constant values until the environment becomes poor and the transmission power control becomes possible.

Also, at time T3, when the reception state worsens due to movement, the measured SIR and measure quality decrease temporarily, however, transmission power control becomes possible, and through the inner-loop transmission-power control and outer-loop transmission-power control, the transmission power increases wi thin a short period of time, and the measured SIR and target SIR become stable at values that correspond to the new reception environment, and the measured quality matches the target quality within a short period of time. In other words, since the target SIR is not excessively small as in the prior art, within a short period of time $\Delta T$ it becomes a value that corresponds to the new environment, and within a short period of time, it is possible to control the transmission power to a value that corresponds to the new environment and to match the measured quality with the target quality.

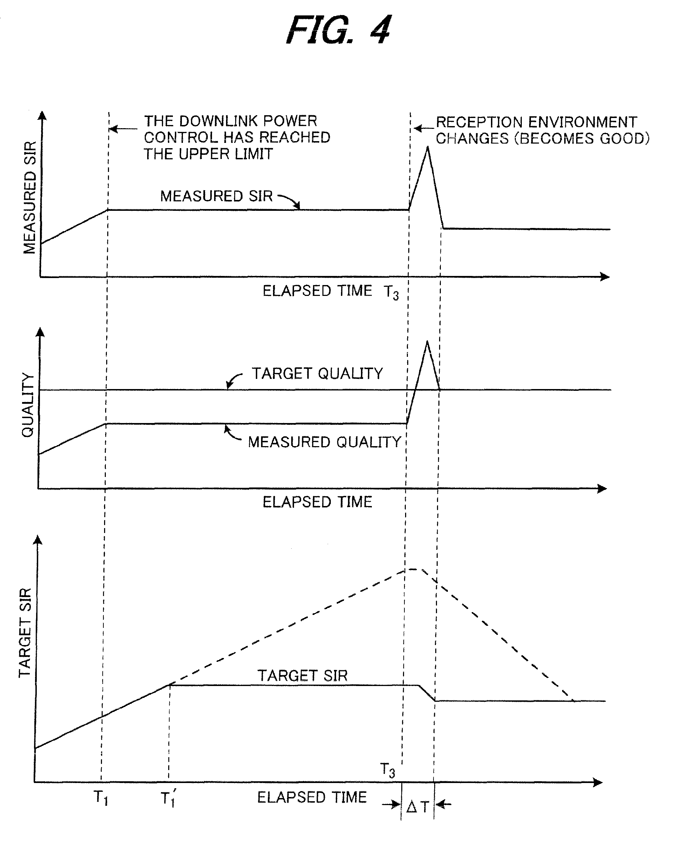

The following transmission power control is performed in an environment with poor reception quality. In other words, in an environment wi th poor reception quality, the measured quality is worse than the target quality, so as shown in FIG. 4, the target-SIR-update unit 29 increases the target SIR by specified amounts. Also, through the inner-loop transmission-power control, control is performed to increase the transmission power, and the measured SIR and measured quality increases gradually. Moreover, at time T1, after the transmission power reaches the upper limit and transmission power control is no longer possible, the measured SIR and measured quality level off until transmission power control becomes possible again. Also, since the measured quality is worse than the target quality, the target-SIR-update unit 29 increases the target SIR by specified amounts after that as well. However, at time T1', when it is detected that transmission power control has become impossible, the target-SIR-update unit 29 stops updating the target SIR, and fixes it at the most recent value. After that, the measured SIR, measured quality and target SIR are fixed at constant values until the environment becomes good and the transmission power control becomes possible again. Moreover, at time T3, when the reception state becomes good due to movement, the measured SIR and measured quality increase temporarily, however, the transmission power control becomes possible, and through the inner-loop transmission-power control and outer-loop transmission-power control, the transmission power is decreased, and within a short period of time the measured SIR and target SIR become stable at values that correspond to the new reception environment, and the measured quality as well, matches the target quality within a short period of time. In other words, since the target SIR is not excessively large as in the prior art, it becomes a value that corresponds to the new environment within a short period of time ΔT, and within a short period of time it is possible to control the transmission power to a value that corresponds to the new environment, and to match the measured quality with the target quality.

(d) Theory for Detecting the State in which Transmission power control is not Possible

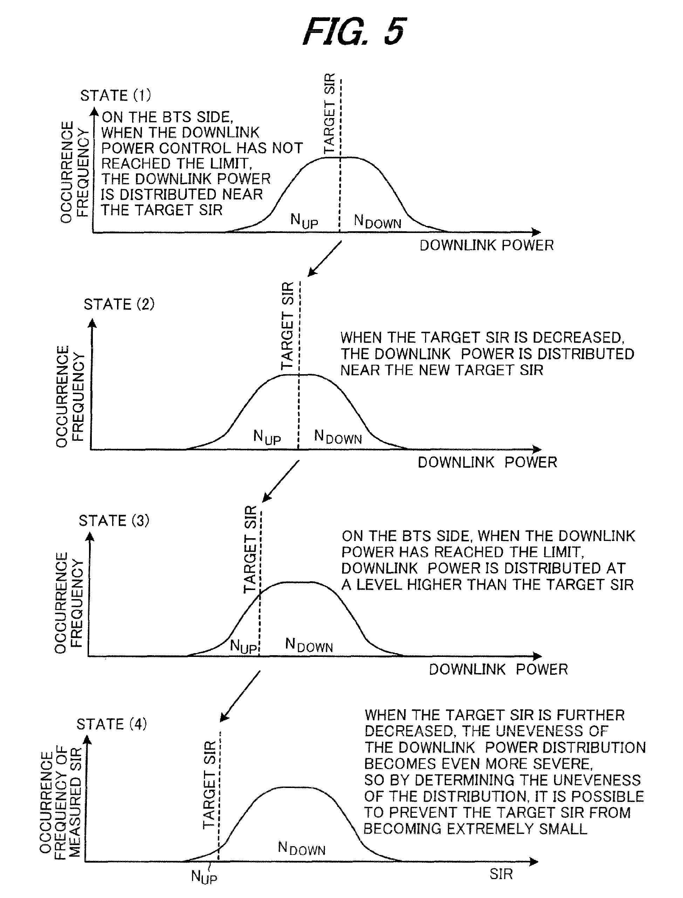

FIG. 5 is a drawing that explains the theory for how the target-SIR-update unit 29 detects the state in which transmission power control is not possible. In a state in which transmission power control is possible, the downlink transmission power is distributed near the target SIR, and shows a normal distribution with the target SIR being in the middle as shown in state (1). Here, the number $N_{DOWN}$ of times the measured SIR on the receiving side is greater than the target SIR, and the number $N_{UP}$ of times the measured SIR is less than the target SIR are nearly equal.

In a state in which transmission power control is possible, when the target SIR is updated, the updated down link transmission power is distributed in a normal distribution near the new target SIR as shown in state (2), and the number of times the measured SIR is greater than the target SIR, and the number $N_{DOWN}$ of times the measured SIR is less than the target SIR are nearly equal. However, as shown in state (3), when the transmission power of the base station reaches the lower limit and transmission power control is no longer possible, the downlink power distribution is greater on the high side of the target SIR, and as shown in state (4), when the target SIR is further decreased, this trend becomes more extreme. In other words, in a state in which transmission power control becomes impossible, the number $N_{UP}$ of times that the measured SIR is less than the target SIR becomes less than the number $N_{DOWN}$ of times that the measured SIR is greater than the target SIR, and this difference increases the smaller the target SIR becomes. Therefore, a power-distribution-judgment unit 30 compares the target SIR with the measured SIR and counts the judgment results, and the target-SIR-update unit 29 determines that transmission power control has reached a limit when control is performed in the direction of decreasing the target SIR, and when the number $N_{UP}$ of times that the measured SIR is less than the target SIR becomes 1/4 or less the number $N_{DOWN}$ of times when the measured SIR is greater than the target SIR. The value 1/4 is just an example and is not limited to this ratio.

The explanation above was for the case in which control was performed to decrease the target SIR, however, it is the same for the case in which control is performed to increase the target SIR. In other words, when the transmission power of the base station reaches the upper limit and transmission power control is no longer possible, the downlink power distribution becomes greater on the low side of the target SIR, and by further increasing the target SIR makes this trend even more extreme. That is, when transmission power control becomes impossible, the number $N_{DOWN}$ of times that the measured SIR is greater than the target SIR becomes less than the number $N_{UP}$ of times that the measured SIR is less than the target SIR, and this difference becomes greater the larger the target SIR becomes. Therefore, the power-distribution-judgment unit 30 compares the target SIR with the measured SIR and counts the comparison results, and the target-SIR-update unit 29 determines that transmission power control has reached a limit when control is performed in the direction of increasing the target SIR, and when the number $N_{DOWN}$ of times that the measured SIR is greater than the target SIR becomes 1/4 or less the number $N_{UP}$ of times when the measured SIR is less than the target SIR. The value 1/4 is just an example and is not limited to this ratio.

(e) Power Distribution Judgment

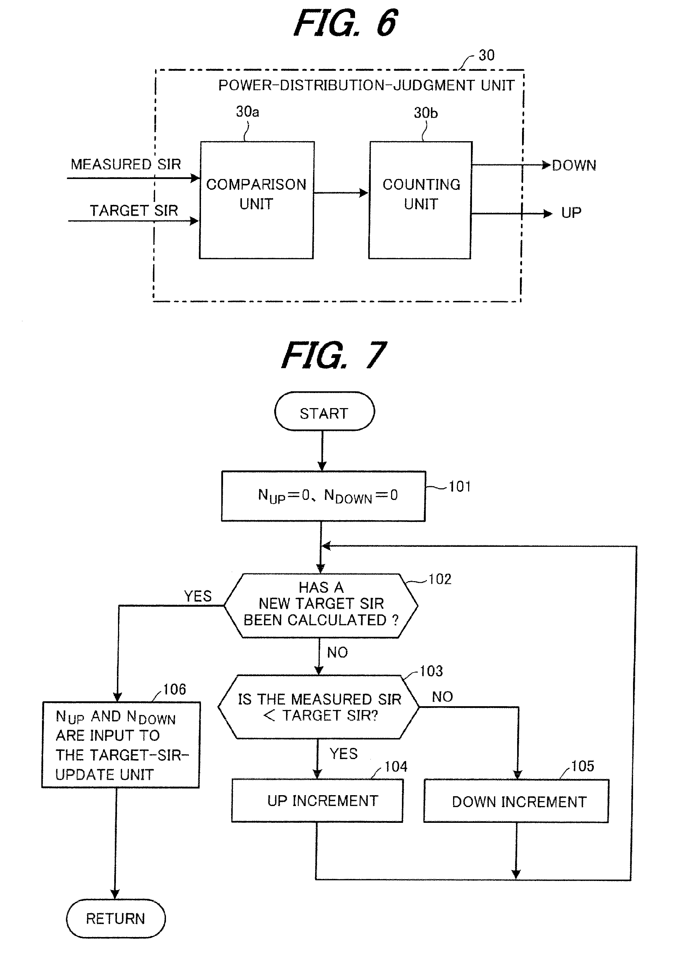

FIG. 6 is a block diagram of the power-distribution-judgment unit 30, and as shown in the figure, this power-distribution-judgment unit 30 comprises; a comparison unit 30a that compares the measured SIR and target SIR every a slot period (667 μs = 10/15 ms); and a counting unit 30b that counts and outputs the number of times that the measured SIR is greater than the target SIR, and the number of times that the measured SIR is smaller than the target SIR during a period from when the target SIR is updated until the next update time.

FIG. 7 is a flowchart that shows the process performed by the power-distribution-judgment unit 30 to measure the power distribution. At first, the count values $N_{DOWN}$ and $N_{UP}$ are cleared to zero (step 101), then the power-distribution-judgment unit 30 checks whether a new target SIR has been calculated (step 102), and when a new target SIR has not been calculated, checks every a slot period whether the measured SIR is less than the target SIR (step 103), and when the measured SIR is less than the target SIR, increments the count value $N_{UP}$ (step 104), however, when the measured SIR is greater than the target SIR, increments the count value $N_{DOWN}$ (step 105), then returns to step 102 and repeats the process. From the above process, number $N_{UP}$ of times when the measured SIR is less than the target SIR, and the number $N_{DOWN}$ of times when the measured SIR is greater than the target SIR are found for the period until the next target SIR is calculated. The process described above is repeated, and in step 102, when a new target SIR is calculated, the count values $N_{UP}$, $N_{DOWN}$ are input to the target-SIR-update unit 29 (step 106).

(f) Target SIR Update Process

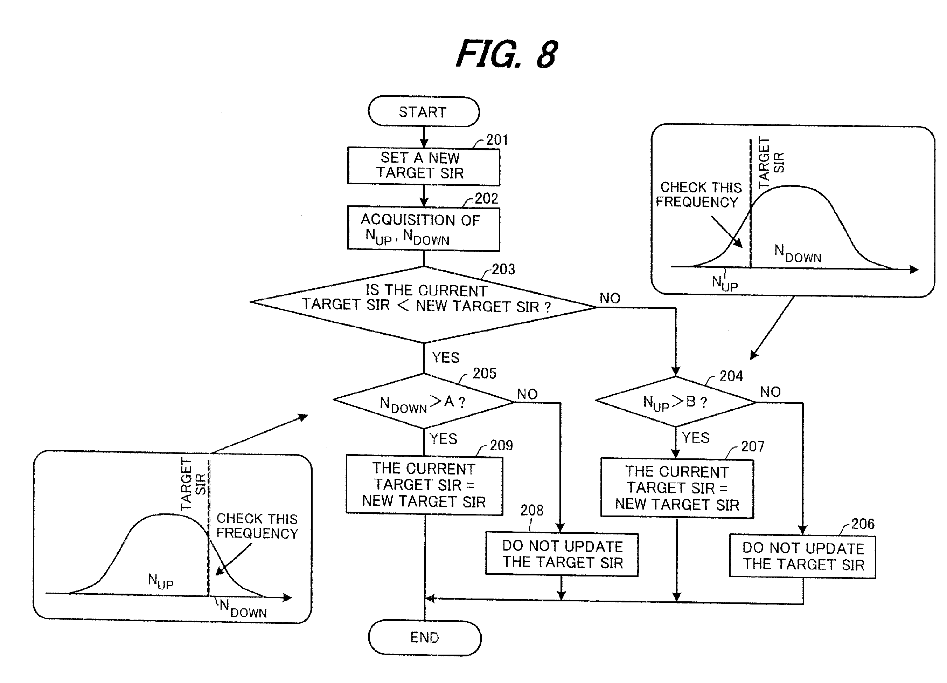

FIG. 8 is a flowchart of the processing performed by the target-SIR-update unit 29. When the comparison result of the target quality and measured quality are input from the comparison unit 27, the target-SIR-update unit 29 sets a new target SIR based on the comparison result (step 201). In other words, when the measured quality is better than the target quality, the target-SIR-update unit 29 sets the new target SIR to a value that is a specified amount $\Delta_1$ less than the current target SIR, and when the measured quality is worse than the target quality, the target-SIR-update unit 29 sets the new target SIR to a value that is a specified amount $\Delta_2$ greater than the current target SIR. Next, the target-SIR-update-unit 29 obtains the count values $N_{UP}$, $N_{DOWN}$ from the power-distribution-judgment unit 30 (step 202), then compares the current target SIR with the new target SIR and determines the update direction of the target SIR (step 203). When control is performed in the direction that decreases the target SIR, the target-SIR-update unit 29 checks whether the number $N_{UP}$ of times that the measured SIR is smaller than the target SIR is 1/4 or less than the number $N_{DOWN}$ of times that the measured SIR is greater than the target SIR (step 204). Here, the value 1/4 is just an example, and the ratio is not limited to this. When $N_{UP}<B(=N_{DOWN}/4)$, the target-SIR-update unit 29 determines that the transmission power has reached the lower limit and that transmission power control has reached a limit, so it does not update the target SIR (step 206). However, when UP>B, the target-SIR-update unit 29 determines that transmission power control is possible, and updates the current target SIR with the new target SIR that was found in step 201 (step 207), and processing ends.

In step 203, when control is performed in the direction that increases the target SIR, the target-SIR-update unit 29 checks whether the number $N_{DOWN}$ of times that the measured SIR is greater than the target SIR is 1/4 or less than the number Nup of times that the target SIR is smaller than the target SIR(step 205). Here, 1/4 is just an example and the ratio is not limited to this. When $N_{DOWN}<A(N_{UP}/4)$, the target-SIR-judgment unit 29 determines that the transmission power has reached the upper limit and that transmission power control has reached a limit, and does not update the target SIR (step 208). However, when $N_{DOWN}>A$, the target-SIR-judgment unit 29 determines that transmission power control is possible, and updates the current target SIR with the new target SIR that was found in step 201 (step 209), and processing ends.

Steps 201 to 205 form a limit-monitoring portion that monitors when the transmission power has reached a limit, and steps 206 to 209 form an update portion that stops update of the target SIR when the transmission power has reached the limit.

(g) Effect

According to the first embodiment described above, the target SIR is stopped from being decreased more than necessary even when a good reception environment continues for a long period of time and transmission power has reached a lower limit; and even though the reception environment may suddenly worsen after that, it is possible to perform control so that the target SIR is suitably changed to correspond with the environment, thus making it possible to maintain a stable communication environment. Moreover, similarly, the target SIR is stopped from being increased more than necessary even when a poor reception environment continues for a long period of time and the transmission power has reached an upper limit; and even though the reception environment may suddenly become good, it is possible to perform control so that the target SIR is suitably changed to correspond with the environment, thus making it possible to maintain a stable communication environment.

Also, according to this first embodiment, by using a SIR value that is measured by a conventional inner loop, it is possible to relatively easily detect the state in which transmission power control is possible, and it is possible to maintain a stable communication environment without having to excessively increase or decrease the downlink power.

(2) Second Embodiment

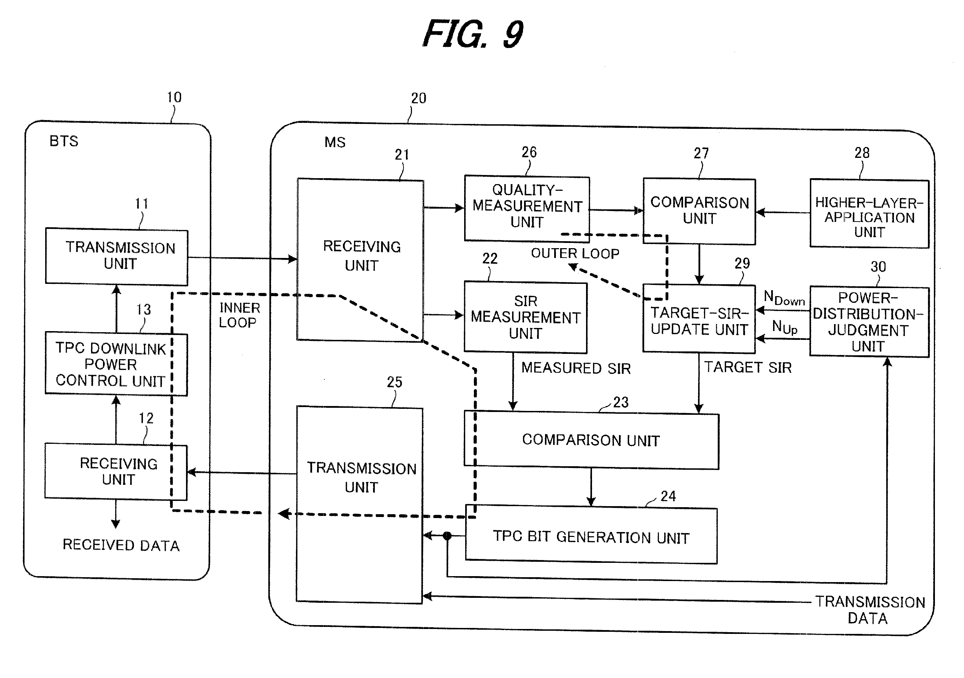

In the first embodiment, the measured SIR and target SIR were compared and the power distribution ($N_{UP}$, $N_{DOWN}$ count) was calculated, however, in this second embodiment, power UP or power DOWN is specified by a TPC bit, and from that the power distribution ($N_{UP}$, $N_{DOWN}$ count) is calculated. This is because, when the measured SIR is greater than the target SIR, the TPC bit specifies power DOWN, and when the measured SIR is less than the target SIR, the TPC bit specifies power UP. FIG. 9 is a drawing showing the construction of a base station and mobile station that make possible the transmission power control of this second embodiment, and it differs from the first embodiment shown in FIG. 1 in that the power-distribution-judgment unit 30 calculates the power distribution ($N_{UP}$, $N_{DOWN}$ count) from the TPC bit and inputs the result to the target-SIR-update unit 29; the other construction being the same as that of the first embodiment.

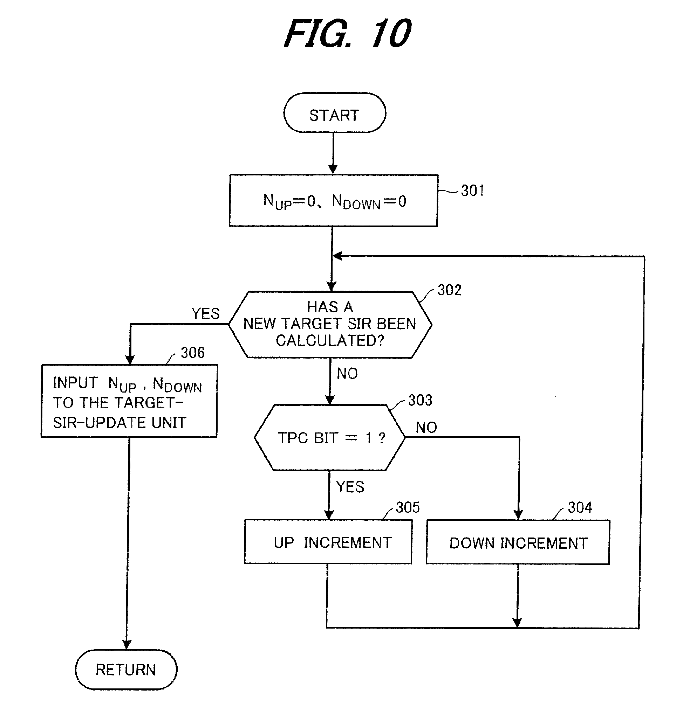

FIG. 10 is a flowchart showing the flow of the power-distribution-judgment process of this second embodiment. Initially, the count values $N_{DOWN}$, $N_{UP}$ are cleared to zero (step 301), then the power-distribution-judgment unit 30 checks whether a new target SIR has been calculated (step 302), and when a new target SIR has not been calculated, it checks whether the TPC bit is '1' every a slot period (667 $\mu$s = 10 ms/15) (step 303), and when the TPC bit = '0', the measured SIR is greater than the target SIR, so it increments the count value $N_{DOWN}$ (step 304), and when the TPC bit = '1', the measured SIR is less than the target SIR, so it increments the count value $N_{UP}$ (step 305), after which it returns to step 302 and repeats the process. From the process described above, the count value $N_{UP}$ for when TPC = '1' (measured SIR < target SIR), and the count value $N_{DOWN}$ for when TPC = '0' (measured SIR > target SIR), are found for the period until the next target SIR is calculated. The above process is repeated, and in step 302, when a new target SIR has been calculated, the power-distribution-judgment unit 30 inputs the count values $N_{UP}$, $N_{DOWN}$ to the target-SIR-update unit 29 (step 306).

According to this second embodiment, by using an uplink TPC bit that is generated by a conventional inner loop, it is possible to relatively easily detect when transmission power control is not possible, and it is possible to maintain stable communication without having to increase or decrease the downlink power excessively.

(3) Third Embodiment

In the first embodiment, transmission power control was determined to have reached a limit when control was performed in the direction of decreasing the target SIR, and when number $N_{UP}$ of times that the measured SIR was less than the target SIR was 1/4 or less than the number $N_{DOWN}$ of times that the measured SIR was greater than the target SIR. Also, transmission power control was determined to have reached a limit when control was performed in the direction of increasing the target SIR, and when number $N_{DOWN}$ of times that the measured SIR was greater than the target SIR was 1/4 or less than the number $N_{UP}$ of times that the measured SIR was less than the target SIR.

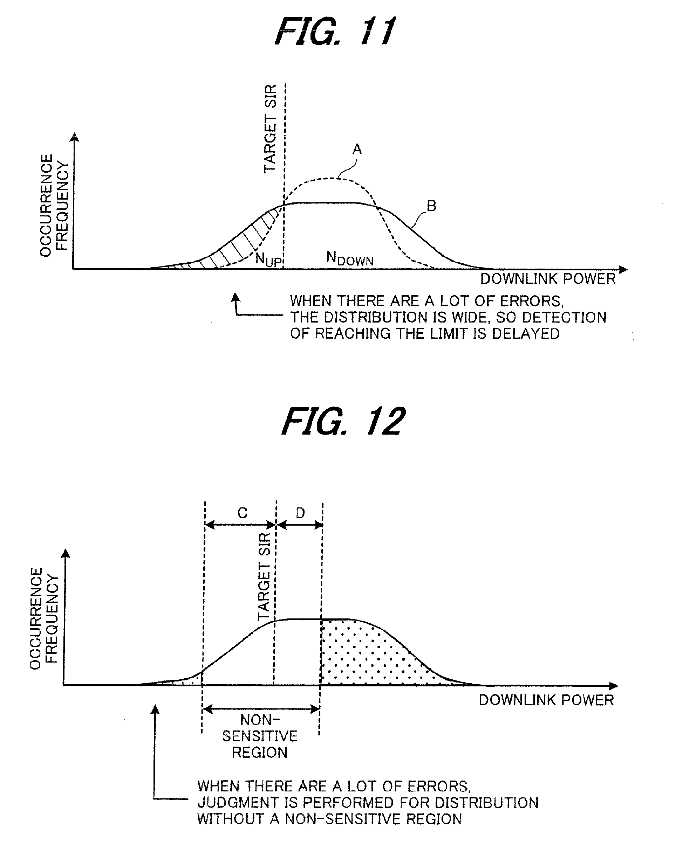

However, since the measured SIR was measured for each slot, error is large. As shown in FIG. 11, from this error, the power distribution does not become a normal distribution A, but rather a distribution B that is flat and wide. Therefore, the count value $N_{UP}$ is increased as shown by the diagonal lines when performing control in the direction of decreasing the target SIR, and detection of time when transmission power control becomes impossible is delayed. Similarly, when performing control in the direction of increasing the target SIR, the count value $N_{DOWN}$ is increased, and detection of time when transmission power control becomes impossible is delayed.

Therefore, in the third embodiment, as shown in FIG. 12, non-sensitive regions C, D are located on both sides of the target SIR, and when the difference between the target SIR and measured SIR is within a non-sensitive region, the $N_{UP}$, $N_{DOWN}$ count is stopped and thereby error judgment is not performed.

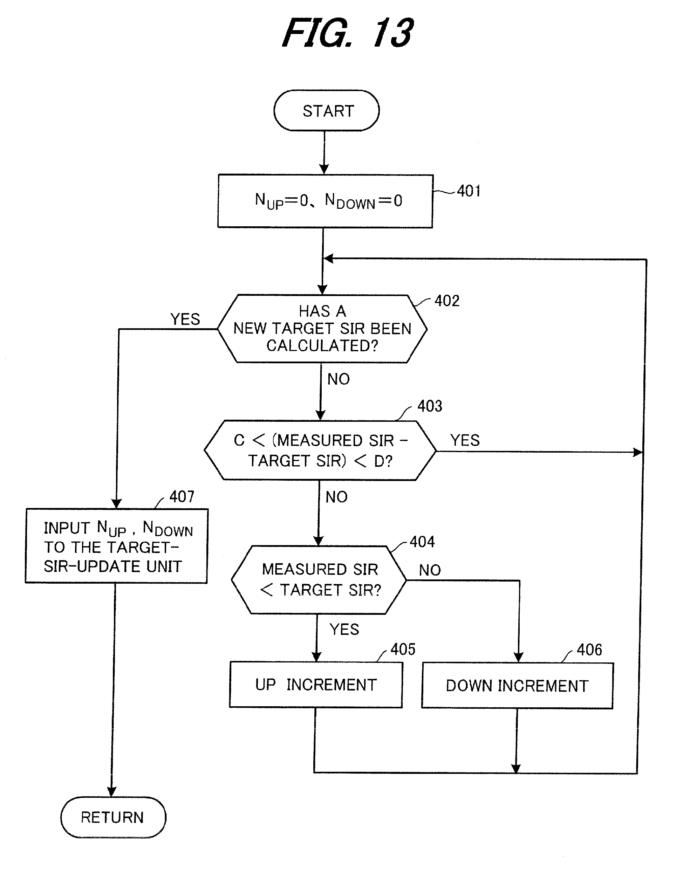

FIG. 13 is a flowchart of the power-distribution-measurement process performed by the power-distribution-judgment unit 30 (see FIG. 1). Initially, the count values $N_{UP}$, $N_{DOWN}$ are cleared to zero (step 401), then the power-distribution-judgment unit 30 checks whether a new target SIR has been calculated (step 402), and when a new target SIR has not been calculated, calculates the difference $\Delta$SIR (= measured SIR - target SIR) every a slot period (667 $\mu$s = 10 ms/15), and checks whether the equation

$$C < \Delta SIR < D$$

is satisfied (step 403). However, C = -2 dB, and D = +1 dB. Here, C = -2 dB, and D = +1 dB is just an example, and these values are not limited to this.

In other words, the power-distribution-judgment unit 30 checks whether the difference between the target SIR and measured SIR is within the non-sensitive region C to D (step 403), and when the difference is within the non-sensitive region C to D, the power-distribution-judgment unit 30 stops the UP, DOWN count and returns to step 402. On the other hand, when the difference is outside of the non-sensitive region C to D, the power-distribution-judgment unit 30 checks whether the measured SIR is less than the target SIR (step 404), and when the measured SIR is less than the target SIR, increments the count value $N_{UP}$ (step 405), and when the measured SIR is greater than the target SIR increments the count value $N_{DOWN}$ (step 406), then returns to step 402 and repeats the process. From the above process, the number $N_{UP}$ of time when the measured SIR is less than the target SIR, and the number of times when the measured SIR is greater than the target SIR are found for the period until the next target SIR is calculated. Also, the power-distribution-judgment unit 30 repeats the above process, and in step 402, when a new target SIR has been calculated, inputs the count values $N_{UP}$, $N_{DOWN}$ to the target-SIR-update unit 29 (step 407).

With this third embodiment, non-sensitive regions are located on both sides of the target SIR, and counting is stopped when the difference between the target SIR and measured SIR is within the non-sensitive region, and counting is performed when the difference between the target SIR and measured SIR is outside of the non-sensitive region, so it is possible to accurately detect on the receiving side when the transmission power has reached the lower limit or upper limit.

In the embodiments above, the case of controlling the downlink transmission power of a base station was explained, however, of course it is also possible to similarly apply this invention to controlling the uplink transmission power from a mobile station to a base station.

**Claims**

1. A transmission power control method of comparing measured quality of received data on a receiving side with target quality and performing variable control of a target SIR, as well as comparing that target SIR with measured SIR and transmitting transmission power control information created based on the comparison results to a transmitting side, then performing control of the transmission power on the transmitting side based on that transmission power control information, comprising steps of:

monitoring when the transmission power has reached a limit; and
stopping update of the target SIR when the transmission power has reached a limit.

2. The transmission power control method of claim 1 comprising a step of restarting variable control of the target SIR when the communication environment becomes poor after the transmission power has reached a lower limit.

3. The transmission power control method of claim 1 comprising a step of restarting variable control of the target SIR when the communication environment becomes good after the transmission power has reached an upper limit.

4. The transmission power control method of claim 1 comprising steps of:

comparing said target SIR with a measured SIR; and
determining that the transmission power has reached a lower limit when control is performed in the direction of decreasing the target SIR, and when the number of times that the measured SIR is less than the target SIR becomes a set ratio or less of the number of times that the measured SIR is greater than the target SIR.

5. The transmission power control method of claim 1 comprising steps of:

comparing said target SIR with a measured SIR; and
determining that the transmission power has reached an upper limit when control is performed in the direction of increasing the target SIR, and when the number of times that the measured SIR is greater than the target SIR becomes a set ratio or less of the number of times that the measured SIR is less than the target SIR.

6. The transmission power control method of claim 4 or claim 5, comprising steps of:

stopping counting of said number of times when there is a non-sensitive region on both sides of the target SIR and the difference between the target SIR and measured SIR is in that non-sensitive region; and
performing counting of said number of times when the difference between the target SIR and measured SIR is not in the non-sensitive region.

7. The transmission power control method of claim 1, comprising steps of:

counting the number of times said transmission power control information specifies power UP, and the number of times said transmission power control information specifies power DOWN; and
determining that the transmission power has reached a lower limit when control is performed in the direction of decreasing the target SIR, and when the number of times power UP is specified becomes a set ratio or less of the number of times power DOWN is specified.

8. The transmission power control method of claim 1, comprising steps of:

counting the number of times said transmission power control information specifies power UP, and the number of times said transmission power control information specifies power DOWN; and
determining that the transmission power has reached an upper limit when control is performed in the direction of increasing the target SIR, and when the number of times power DOWN was specified becomes a set ratio or less of the number of times power UP was specified.

9. A transmission power control apparatus that compares measured quality of received data wi th target quality and performs variable control of a target SIR, as well as, compares that target SIR with measured SIR, and transmits transmission power control information created based on the comparison result to a transmitting side, comprising:

a limit-monitoring unit that monitors when the transmission power has reached a limit; and
a target-SIR-update unit that stops update of the target SIR when the transmission power has reached a limit.

10. The transmission power control apparatus of claim 9 wherein
said target-SIR-update unit restarts variable control of the target SIR when the communication environment becomes poor after the transmission power has reached a lower limit.

11. The transmission power control apparatus of claim 9, wherein
said target-SIR-update unit restarts variable control of the target SIR when the communication environment becomes good after the transmission power has reached an upper limit.

12. The transmission power control apparatus of claim 9, wherein
limit-monitoring unit comprises:

a counting unit that compares said target SIR with a measured SIR and counts the number of times when the measured SIR was less than the target SIR, and the number of times when the measured SIR was greater than the target SIR; and

a judgment unit that determines that the transmission power has reached a lower limit when control is performed in the direction of decreasing the target SIR, and when the number of times that the measured SIR is less than the target SIR becomes a set ratio or less of the number of times that the measured SIR is greater than the target SIR.

13. The transmission power control apparatus of claim 9, wherein
limit-monitoring unit comprises:

a counting unit that compares said target SIR with a measured SIR and counts the number of times when the measured SIR is less than the target SIR, and the number of times when the measured SIR is greater than the target SIR; and

a judgment unit that determines that the transmission power has reached an upper limit when control is performed in the direction of increasing the target SIR, and when the number of times that the measured SIR is greater than the target SIR becomes a set ratio or less of the number of times that the measured SIR is less than the target SIR.

14. The transmission power control apparatus of claim 12 or claim 13, wherein said countingunit stops said counting when there is a non-sensitive region on both sides of the target SIR and the difference between the target SIR and measured SIR is in that non-sensitive region; and performs said counting when the difference between the target SIR and measured SIR is not in the non-sensitive region.

15. The transmission power control apparatus of claim 9, wherein
said limit-monitoring unit comprises:

a counting unit that counts the number of times said transmission power control information specifies power UP, and the number of times said transmission power control information specifies power DOWN; and

a judgment unit that determines that the transmission power has reached a lower limit when control is performed in the direction of decreasing the target SIR, and when the number of times power UP is specified becomes a set ratio or less of the number of times power DOWN is specified.

16. The transmission power control apparatus of claim 9, wherein
said limit-monitoring unit comprises:

a counting unit that counts the number of times said transmission power control information specifies power UP, and the number of times said transmission power control information specifies power DOWN; and

a judgment unit that determines that the transmission power has reached an upper limit when control is performed in the direction of decreasing the target SIR, and when the number of times power DOWN is specified becomes a set ratio or less of the number of times power UP is specified.

17. A radio communication apparatus comprising:

a transmission unit that transmits a signal that is used in transmission power control to another communication apparatus, in which the signal is created using a first comparison result obtained by comparing reception quality calculated based on a received signal before decoding with target-reception quality;

a target-reception quality update unit that performs control to increase or decrease said target-reception quality according to a second comparison result, which is obtained by comparing error quality calculated based on a received signal after decoding with target error quality: and

a regulating unit that regulates control of increasing or decreasing said target-reception quality by said target-reception quality update unit based on said first comparison result.

18. The radio communication apparatus of claim 17, wherein
said regulating unit regulates control of decreasing said target-reception quality when the reception quality calculated based on a received signal before decoding tends toward the high side with respect to said target-reception quality.

19. The radio communication apparatus of claim 17, wherein said regulating unit regulates control of increasing said target-reception quality when the reception quality that is calculated based on the received signal before decoding tends toward the low side with respect to said target-reception quality.

FIG. 1

# FIG. 2

DOWNLINK DPDCH, DPCCH SLOT FORMAT

EP 1 796 291 A1

# FIG. 3

THE DOWNLINK POWER CONTROL
HAS REACHED THE LOWER LIMIT

RECEPTION
ENVIRONMENT CHANGES
(BECOMES POOR)

MEASURED SIR

MEASURED SIR

ELAPSED TIME

$T_1$

$T_3$

QUALITY

MEASURED QUALITY

TARGET QUALITY

ELAPSED TIME

TARGET SIR

DETECTION
DELAY

TARGET SIR OF THIS INVENTION

PRIOR TARGET SIR

FROM THE DOWNLINK
POWER DISTRIBUTION IT IS
DETERMINED THAT
THE TRANSMISSION POWER HAS
REACHED THE LOWER LIMIT

$T_1'$

ELAPSED TIME

$\Delta T$

16

# FIG. 4

THE DOWNLINK POWER
CONTROL HAS REACHED
THE UPPER LIMIT

RECEPTION ENVIRONMENT
CHANGES (BECOMES GOOD)

MEASURED SIR

MEASURED SIR

ELAPSED TIME $T_3$

TARGET QUALITY

MEASURED QUALITY

ELAPSED TIME

TARGET SIR

$T_1$    $T_1'$    ELAPSED TIME    $T_3$    $\Delta T$

# FIG. 5

STATE (1)

OCCURRENCE FREQUENCY

TARGET SIR

ON THE BTS SIDE,
WHEN THE DOWNLINK
POWER CONTROL HAS NOT
REACHED THE LIMIT,
THE DOWNLINK POWER
IS DISTRIBUTED NEAR
THE TARGET SIR

$N_{UP}$ $N_{DOWN}$

DOWNLINK POWER

STATE (2)

OCCURRENCE FREQUENCY

TARGET SIR

WHEN THE TARGET SIR IS DECREASED,
THE DOWNLINK POWER IS DISTRIBUTED
NEAR THE NEW TARGET SIR

$N_{UP}$ $N_{DOWN}$

DOWNLINK POWER

STATE (3)

OCCURRENCE FREQUENCY

TARGET SIR

ON THE BTS SIDE, WHEN THE DOWNLINK
POWER HAS REACHED THE LIMIT,
DOWNLINK POWER IS DISTRIBUTED AT
A LEVEL HIGHER THAN THE TARGET SIR

$N_{UP}$ $N_{DOWN}$

DOWNLINK POWER

STATE (4)

OCCURRENCE FREQUENCY OF MEASURED SIR

TARGET SIR

WHEN THE TARGET SIR IS FURTHER
DECREASED, THE UNEVENESS OF
THE DOWNLINK POWER DISTRIBUTION
BECOMES EVEN MORE SEVERE,
SO BY DETERMINING THE UNEVENESS
OF THE DISTRIBUTION, IT IS POSSIBLE
TO PREVENT THE TARGET SIR FROM
BECOMING EXTREMELY SMALL

$N_{DOWN}$

$N_{UP}$ SIR

# FIG. 6

POWER-DISTRIBUTION-JUDGMENT UNIT — 30

30a

MEASURED SIR →

TARGET SIR →

COMPARISON UNIT

→

30b

COUNTING UNIT

→ DOWN

→ UP

# FIG. 7

START

$N_{UP}=0、N_{DOWN}=0$ — 101

HAS A NEW TARGET SIR BEEN CALCULATED ? — 102

YES →

$N_{UP}$ AND $N_{DOWN}$ ARE INPUT TO THE TARGET-SIR-UPDATE UNIT — 106

RETURN

NO

IS THE MEASURED SIR < TARGET SIR? — 103

YES

NO

UP INCREMENT — 104

DOWN INCREMENT — 105

# FIG. 8

EP 1 796 291 A1

```
                          START

                            |
                            v
                    ┌──────────────┐ ┌─201
                    │ SET A NEW    │
                    │ TARGET SIR   │
                    └──────────────┘
                            |
                            v
                    ┌──────────────┐ ┌─202
                    │ ACQUISITION OF│
                    │ N_UP, N_DOWN │
                    └──────────────┘
                            |
                            v
                    ◇─────────────────◇ ┌─203
                    IS THE CURRENT              NO
                   TARGET SIR < NEW TARGET SIR ?
                    ◇─────────────────◇
                            |
                           YES
```

CHECK THIS FREQUENCY → TARGET SIR

$N_{UP}$   $N_{DOWN}$

205
$N_{DOWN} > A$ ?   NO

204
$N_{UP} > B$ ?   NO

YES

209
THE CURRENT TARGET SIR = NEW TARGET SIR

207
THE CURRENT TARGET SIR = NEW TARGET SIR

208
DO NOT UPDATE THE TARGET SIR

206
DO NOT UPDATE THE TARGET SIR

TARGET SIR   CHECK THIS FREQUENCY

$N_{UP}$   $N_{DOWN}$

END

# FIG. 9

# FIG. 10

```
                          ┌──────────┐
                          │  START   │
                          └────┬─────┘
                               │
                               ▼
                    ┌─────────────────────┐
                    │  N_UP=0、 N_DOWN=0    │─── 301
                    └──────────┬──────────┘
                               │
                               ▼
         YES          ╱────────────────────╲  302
      ┌──────────────┤    HAS A              │
      │              │  NEW TARGET SIR BEEN  │
      │              │  CALCULATED?          │
      │              ╲──────────┬───────────╱
      ▼  306                    │ NO
┌──────────────────┐           ▼
│ INPUT N_UP , N_DOWN│    ╱──────────────╲  303
│ TO THE TARGET-    │   │  TPC BIT = 1 ?  │─── NO ──┐
│ SIR-UPDATE UNIT   │    ╲──────┬────────╱          │
└────────┬─────────┘           │ YES                │
         │                     ▼                    ▼
         │              ┌──────────────┐   ┌──────────────────┐
         │              │ UP INCREMENT │   │  DOWN INCREMENT  │
         │         305──│              │   │                  │──304
         │              └──────┬───────┘   └────────┬─────────┘
         ▼                     │                    │
   ┌──────────┐                └────────┬───────────┘
   │  RETURN  │                         │
   └──────────┘                         ▼
```

$N_{UP}=0$、 $N_{DOWN}=0$ — 301

HAS A NEW TARGET SIR BEEN CALCULATED? — 302

TPC BIT = 1 ? — 303

INPUT $N_{UP}$ , $N_{DOWN}$ TO THE TARGET-SIR-UPDATE UNIT — 306

UP INCREMENT — 305

DOWN INCREMENT — 304

## FIG. 11

WHEN THERE ARE A LOT OF ERRORS,
THE DISTRIBUTION IS WIDE, SO DETECTION
OF REACHING THE LIMIT IS DELAYED

## FIG. 12

WHEN THERE ARE A LOT OF ERRORS,
JUDGMENT IS PERFORMED FOR DISTRIBUTION
WITHOUT A NON-SENSITIVE REGION

# FIG. 13

```
                    ┌─────────┐
                    │  START  │
                    └────┬────┘
                         │
                         ▼
            ┌─────────────────────────┐
            │  N_UP=0、 N_DOWN=0      │────401
            └────────────┬────────────┘
                         │
                         ▼
           ╱─────────────────────────╲
  YES      │        HAS A            │────402
  ◄────────│  NEW TARGET SIR BEEN    │
           │      CALCULATED?        │
           ╲─────────────┬───────────╱
                         │ NO
                         ▼
                      ╱──────────────────────╲
                      │ C < (MEASURED SIR −   │────403   YES
                      │    TARGET SIR) < D?   │──────────►
                      ╲──────────┬────────────╱
                                 │ NO
                                 ▼
                         ╱──────────────────╲
                         │   MEASURED SIR    │────404   NO
                         │  < TARGET SIR?    │──────────►
                         ╲────────┬──────────╱
                                  │ YES
                                  ▼
  ┌─────────────────────┐   ┌──────────────┐   ┌──────────────────┐
  │ INPUT N_UP , N_DOWN │   │ UP INCREMENT │   │ DOWN INCREMENT   │
  │ TO THE TARGET-      │   └──────┬───────┘   └────────┬─────────┘
  │ SIR-UPDATE UNIT     │          405              406
  └──────────┬──────────┘
            407
             │
             ▼
        ┌─────────┐
        │ RETURN  │
        └─────────┘
```

# FIG. 14

BTS (1)

TRANSMISSION UNIT (1a)

TPC DOWNLINK POWER CONROL UNIT (1b)

TPC

RECEIVING UNIT (1c)

RECEIVED DATA

INNER LOOP

MS (2)

RECEIVING UNIT (2a)

QUALITY-MEASURE-MENT UNIT (2f)

MEASURED BLER

COMPARISON UNIT (2g)

BLER

HIGHER-LAYER-APPLICATION UNIT (2h)

OUTER LOOP

SIR MEASURE-MENT UNIT (2b)

TARGET-SIR-UPDATE UNIT (2i)

MEASURED SIR

TARGET SIR

TRANSMISSION UNIT (2e)

COMPARISON UNIT (2c)

TPC BIT GENERATION UNIT (2d)

TRANSMISSION DATA

EP 1 796 291 A1

## FIG. 15

DPDCH | Data<br>$N_{data}$ bits

$T_{slot}$＝2560 chips, $N_{data}$＝$10*2^k$ bits (K=0.6)

DPCCH | Pilot<br>$N_{Pilot}$ bits | TFCI<br>$N_{TFCI}$ bits | FBI<br>$N_{FBI}$ bits | TPC<br>$N_{TPC}$ bits

$T_{slot}$＝2560 chips, 10bits

| Slot #0 | Slot #1 | | Slot #i | | | Slot #14 |

1 radio frame：$T_f$＝10ms

## FIG. 16

| TPC Bit Pattern | | Transmitter power control command |
|---|---|---|
| $N_{TPC}=1$ | $N_{TPC}=2$ | |
| 1 | 11 | 1 |
| 0 | 00 | 0 |

# FIG. 17

# FIG. 18

DOWNLINK POWER CONTROL
HAS REACHED AN UPPER LIMIT

WHEN THERE IS NOT
UPPER LIMIT, THE POWER
INCREASES TO THE VALUE
CORRESPONDING TO THE
TARGET QUALITY

THE RECEPTION
ENVIRONMENT CHANGES
(BECOMES GOOD)

MEASURED SIR

MEASURED SIR (y-axis)

$T_1$    $T_2$    ELAPSED TIME    $T_3$

TARGET
QUALITY

MEASURED QUALITY WHEN
THERE IS NOT UPPER LIMIT

ACTUAL MEASURED
QUALITY

QUALITY (y-axis)

ELAPSED TIME

SINCE THE POWER DOES NOT
INCREASE TO THE VALUE
CORRESPONDING TO THE
TARGET QUALITY SO THE
TARGET SIR CONTINUES TO
INCREASE

THE TARGET SIR INCREASES
TOO MUCH, SO RESPONSE TO
CHANGES IN THE RECEPTION
ENVIRONMENT IS DELAYED

TARGET SIR

TARGET SIR (y-axis)

WHEN THE POWER INCREASES TO
THE VALUE CORRESPONDING TO
THE TARGET QUALITY, THE TARGET
BECOMES STABLE AT THIS LEVEL

WHEN THE TARGET SIR IS
STABLE, RECOVERY FROM
CHANGES IN THE RECEPTION
ENVIRONMENT IS QUICK

ELAPSED TIME

28

## INTERNATIONAL SEARCH REPORT

| International application No. |
| --- |
| PCT/JP2004/014224 |

A. CLASSIFICATION OF SUBJECT MATTER
Int.Cl⁷ H04B7/26

According to International Patent Classification (IPC) or to both national classification and IPC

B. FIELDS SEARCHED

Minimum documentation searched (classification system followed by classification symbols)
Int.Cl⁷ H04B1/04, H04B7/005, H04B7/24-7/26, H04Q7/00-7/38

Documentation searched other than minimum documentation to the extent that such documents are included in the fields searched
Jitsuyo Shinan Koho          1922-1996     Toroku Jitsuyo Shinan Koho   1994-2004
Kokai Jitsuyo Shinan Koho     1971-2004     Jitsuyo Shinan Toroku Koho   1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | WO 01/01603 A1 (QUALCOMM INC.), 04 January, 2001 (04.01.01), | 1-5,7-13, 15-19 |
| Y | Page 9, lines 22 to 34; page 14, line 31 to page 15, line 10 & US 6529482 A          & EP 1192734 A1 & JP 2003-503885 A | 6,14 |
| Y | EP 1107482 A1 (MATSUSHITA ELECTRIC INDUSTRIAL CO., LTD.), 21 June, 2001 (21.06.01), Par. Nos. [0030] to [0031] & JP 13-007763 A | 6,14 |

☐ Further documents are listed in the continuation of Box C.      ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 December, 2004 (20.12.04) | 11 January, 2005 (11.01.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**EP 1 796 291 A1**

## REFERENCES CITED IN THE DESCRIPTION

**Patent documents cited in the description**

- JP 2001274748 A